# EUROPEAN PATENT APPLICATION

(11) **EP 3 267 086 A1**
(43) Date of publication of application: **10.01.2018**
(21) Application number: 16290129.2
(22) Date of filing: 05.07.2016
(51) Int. Cl.: F16L 37/088, F16L 37/14

(54) **COUPLING ARRANGEMENT, A CONNECTOR FOR A COUPLING ARRANGEMENT AND A DUCT COMPRISING A COUPLING ARRANGEMENT**

(71) Applicant: MANN+HUMMEL GmbH, 71638 Ludwigsburg (DE)
(72) Inventor: Marteau, Christophe, 53000 Laval (FR); Bedouet, Cécile, 53810 Changé (FR); Foulboeuf, Gwenael, 53260 Entrammes (FR); Le Goff, Hervé, 53940 Le Genest St Isle (FR)
(74) Representative: Seyboth, Matthias

(57) **Abstract**

The invention relates to a coupling arrangement (100) for coupling a first connector (10) and a second connector (60), the first connector (10) having an opening (12) for receiving at least a spigot (62) of the second connector (60) and providing at least one slot (30) arranged in the circumferential wall (20) of the first connector (10), wherein a detent spring (70) is provided having at least one leg (72), the at least one leg (72, 74, 76) of the detent spring (70) in a closed state of the detent spring (70) extending in an inner section (14) of the first connector (10) and clamping the second connector (60) when the second connector (60) being arranged in its end position in the first connector (10), wherein the slot (30, 32) is configured as a locking groove for the at least one leg (72, 74, 76), the slot (30) having a central curved segment (38), so that a concave side (50) of the curved segment (38) is pointing axially in the same direction as the opening (12) of the first connector (10).

The invention relates also to a connector (10) for such a coupling arrangement.

## Description

### Technical Field

The invention relates to a coupling arrangement and a Connector for a coupling arrangement and a duct comprising a coupling arrangement.

### Prior Art

Quick coupling arrangements for coupling liquid or gas pipe ducts are generally known in the art. For internal combustion engines air ducts are known which guide fluids, in particular air, between different devices of the engine, e.g. compressed air from a charger to the inlet of the engine. For establishing the coupling, an inner connector is inserted into an outer connector and locked by an elastic detent spring which engages slots in the outer one of the two connectors to cooperate with an undercut of the inner connector to keep the connectors in place during operation. During operation such quick coupling arrangements are prone to vibrations, movements and influence of high pressure and pressure pulsation of the fluid in the pipe duct.

DE 2012102801 U1 discloses a coupling arrangement for securely connecting pipe ducts. For improving the stability of the connection, a straight slot is arranged in the circumferential wall of the outer connector. The end segments of the slot extend toward the opening of the outer connector through which the inner connector is inserted. The end segments enlarge the clearance of the slot in its end segments.

### Disclosure of the Invention

It is an object of the invention to provide a coupling arrangement with improved stability during operation.

Another object of the invention is to provide a connector for such a coupling arrangement.

One object of the invention is achieved by a coupling arrangement for coupling a first connector and a second connector, the first connector having an opening for receiving at least a spigot of the second connector and providing at least one slot arranged in the circumferential wall of the first connector, wherein a detent spring is provided having at least one leg, the at least one leg of the detent spring in a closed state of the detent spring extending in an inner section of the first connector and clamping the second connector when the second connector being arranged in its end position in the first connector, wherein the slot is configured as a locking groove for the at least one leg, the slot having a central curved segment, so that a concave side of the curved segment is pointing in the same axial direction as the opening of the first connector.

Another object of the invention is achieved by a connector for a coupling arrangement, having an opening for receiving at least a spigot a second connector and providing at least one slot arranged in a circumferential wall for receiving and locking a leg of a detent spring wherein the slot is configured as a locking groove for the at least one leg, the slot having a central curved segment, so that a concave side of the curved segment is pointing axially in the same direction as the opening of the first connector.

The other claims, the description and the drawings describe advantageous embodiments of the invention.

According to a first aspect of the invention, a coupling arrangement for coupling a first connector and a second connector is proposed, the first connector having an opening for receiving at least a spigot of the second connector and providing at least one slot arranged in the circumferential wall of the first connector, wherein a detent spring is provided having at least one leg, the at least one leg of the detent spring in a closed state of the detent spring extending in an inner section of the first connector and clamping the second connector when the second connector being arranged in its end position in the first connector, wherein the slot is configured as a locking groove for the at least one leg, the slot having a central curved segment, so that a concave side of the curved segment is pointing in the same axial direction as the opening of the first connector.

The curved segment provides a secure catch for the leg of the detent spring and keeps it in place during operation even when external forces act on the connection of the connectors. Thus, opening of the detent spring and resulting disassembly of the two connectors can be prevented.

The inventive coupling arrangement is particularly useful for air ducts in vehicles.

According to an advantageous embodiment at least the curved segment of the slot may have a constant or at least a substantially constant width. Favorably, the slot can have a nearly constant width or a constant width. Locking of the detent spring is possible without increasing a gap in the slot. The stiffness of the connector wall is improved by the curved segment of the slot. Smaller diameters of the detent spring are possible, thus reducing the assembly force when the detent spring is mounted as well as reducing the undercut where the detent spring positions the inner connector.

According to an advantageous embodiment the curvature of the central curved segment of the slot may have a constant or at least a substantially constant radius. A constant radius of the slot is convenient for manufacturing the connector as well as for improving the stiffness of the connector wall. In an alternative embodiment, the slot may be V-shaped in the central curved segment. In a further alternative embodiment, the slot may have a varying radius in the central curved segment.

According to an advantageous embodiment at one or both sides of the curved segment the slot may provide straight end segments arranged at equal axial heights in the circumferential wall, or at one or both sides of the curved segment the slot may provide an angled end segment which points in the axial direction opposite to the opening of the first connector. In particular, angled end segments may improve the stiffness of the wall of the connector.

According to an advantageous embodiment at least two slots may be arranged in the circumferential wall of the first connector, the at least two slots having a central curved segment. A U-shaped standard detent spring may be used for establishing the coupling between the two connectors.

According to an advantageous embodiment three slots may be arranged in the circumferential wall of the first connector, wherein one of the slots is configured as a straight slot. A more complex detent spring can be used. Alternatively, all slots may have a central curved segment. Generally, the number of slots in the outer connector as well their size can be adjusted according to the diameter of the duct pipes to be coupled via the coupling arrangement.

According to another aspect of the invention, a connector for a coupling arrangement is proposed, having an opening for receiving at least a spigot of a second connector and providing at least one slot arranged in a circumferential wall for receiving and locking a leg of a detent spring wherein the slot is configured as a locking groove for the at least one leg, the slot having a central curved segment, so that a concave side of the curved segment is pointing in the same axial direction as the opening of the first connector.

The curved segment in the connector provides a secure catch for the leg of the detent spring and keeps it in place during operation even when external forces act on the connection of the connectors. Thus, detachment of the detent spring and resulting disassembly of the two connectors can be prevented. Preferably, the connector is a female connector of a coupling arrangement.

According to an advantageous embodiment of the connector at least the curved segment of the slot may have a constant width. Favorably, the slot can have a constant or nearly constant width. Locking of the detent spring in the connector is possible without increasing a gap in the slot. The stiffness of the connector wall is improved by the curved segment of the slot. Smaller diameters of the detent spring are possible, thus reducing the assembly force when the detent spring is mounted as well as reducing the undercut where the detent spring positions the inner connector.

According to an advantageous embodiment of the connector the curvature of the central curved segment of the slot may have a constant radius. A constant radius of the slot is convenient for manufacturing the connector as well as for improving the stiffness of the connector wall.

According to an advantageous embodiment of the connector the curved segment of the slot may cover at least 30%, preferably at least 50% of an effective circumferential length of the slot in the circumferential wall of the first connector. The effective circumferential length may be considered as the length of the slot projected on the circumference of the wall at the axial location of the slot. The size of the curved segment can be adapted to the size of the connector. Alternatively or additionally, the size of the curved segment may be adapted to a desired stiffness increase.

According to an advantageous embodiment of the connector at one or both sides of the curved segment the slot may provide straight end segments arranged at equal axial heights in the circumferential wall.

According to an advantageous embodiment of the connector at least at one side of the curved segment the slot may provide an angled end segment which points in the axial direction opposite to the opening of the first connector. Preferably, the at least one angled end segment may connect to the central curved segment by means of a curved transition region, preferably by means of a curved transition region with a radius which is increasing with increasing distance from the central curved segment. In particular, angled end segments may improve the stiffness of the wall of the connector.

According to an advantageous embodiment of the connector at least two slots may be arranged in the circumferential wall of the first connector, the at least two slots having a central curved segment. The number of the slots may be adapted to the diameter of the connector.

According to an advantageous embodiment of the connector three slots may be arranged in the circumferential wall of the first connector, wherein one of the slots is configured as a straight slot. The number of the slots may be adapted to the diameter of the connector. For instance, if the diameter of the connector is large, four slots or more may be provided.

According to an advantageous embodiment of the connector the curved segment of the slot has a width approximately 0.5mm wider than the width of the detent spring. More advantageously the groove has a width from 1.5 to 3mm.

Advantageously the curvature of the central curved segment of the slot may have a substantially constant radius approximately same as the inner diameter of the duct pipes.

### Brief Description of the Drawings

The present invention together with the above-mentioned and other objects and advantages may best be understood from the following detailed description of the embodiments, but not restricted to the embodiments, wherein is shown in:
- Figure 1: an isometric view of a coupling arrangement according to an embodiment of the invention with two connectors disassembled and a detent spring mounted to the outer one of the connectors;
- Figure 2: a side view of a connector according to an example embodiment showing a slot with a central curved segment between two straight segments;
- Figure 3: an enhanced view of a region of the connector in Figure 2;
- Figure 4: a side view of a connector according to an example embodiment showing a slot with a central curved segment between two angled segments;
- Figure 5: a top view of a coupling arrangement according to an example embodiment cut at the coupling region showing a U-shaped detent spring mounted to the coupling arrangement;
- Figure 6: a side view of a connector according to an example embodiment showing three slots on the connector wall; and
- Figure 7: a top view of a cut region of a coupling arrangement according to an example embodiment showing a triangular-shaped detent spring mounted to the coupling arrangement.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

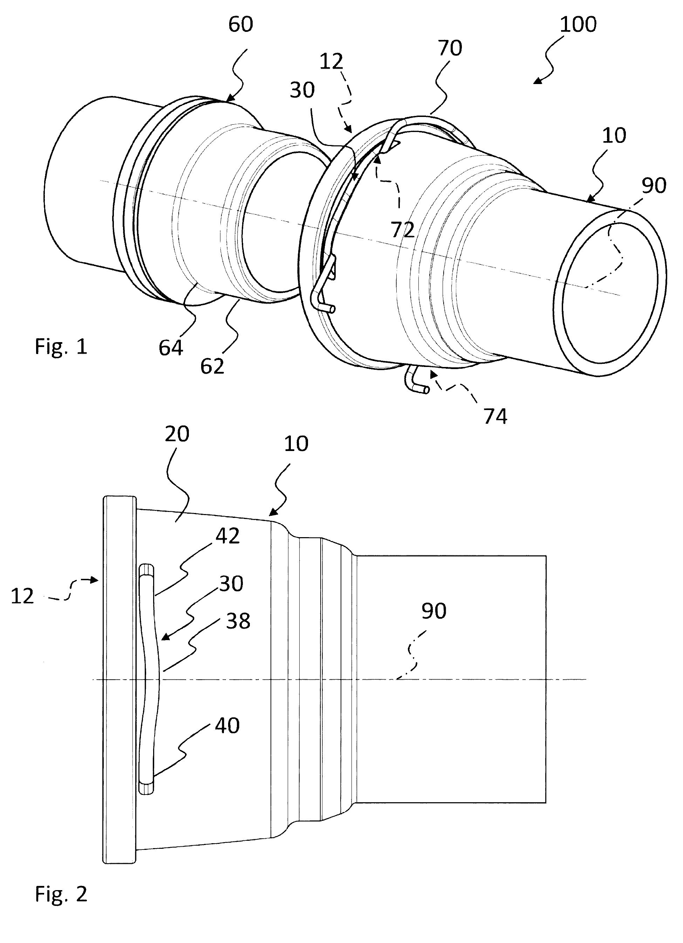

Figure 1 depicts an isometric view of a coupling arrangement 100 according to an embodiment of the invention with a first connector 10 and a second connector 60 in a disassembled state and a detent spring 70 mounted to the first connector 10. The connectors 10, 60 share a common central axis 90 when coupled together.

The detent spring 70 has a U-shaped form in this embodiment having two straight legs 72, 74 connected by a bridge where only a part of one leg 72 is visible in the Figure. The detent spring 70 is mounted in slots in the wall of the first connector 10, where only one slot 30 is visible in the Figure. When inserted in the slots, the detent spring 70 penetrates the wall of the first connector 10 with its legs 72, 74 and extends into the inner volume of the first connector 10. The slots act as locking grooves for the detent spring 70 on both sides of the first connector 10. Details of the slot 30 are described in Figure 2.

The second connector 60 is intended to be introduced with its spigot 62 into an opening 12 of the first connector 10 until the legs of the detent spring 70 snap behind an undercut 64 of the spigot 62. The elasticity of the detent spring 70 allows for moving the spigot 62 into the first connector 10.

Figure 2 shows a side view of the first connector 10 according to an example embodiment. The connector 10 shows a slot 30 with a central curved segment 38 arranged between two straight segments 42, 44.

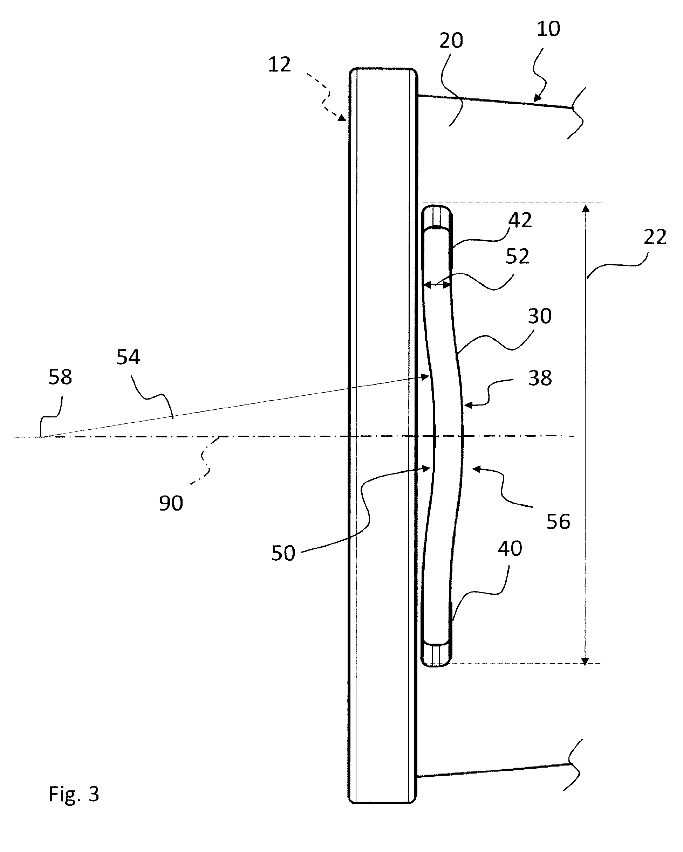

Figure 3 shows an enhanced view of the slot region close to the opening 12 of the first connector 10.

The slot 30 in the wall of the first connector 10 has a central curved segment 38, so that a concave side 50 of the curved segment 38 is pointing axially in the same direction as the opening 12 of the first connector 10. In this embodiment, the radius 54 of the central curved segment 38 of the slot 30 is a constant radius. The center 58 of a circle circumscribed by the radius 54 is located on a parallel to the central axis 90 of the first connector 10. In an alternative embodiment not shown, the slot 30 may be V-shaped in the central curved segment. In a further alternative embodiment not shown, the slot 30 may have a varying radius in the central curved segment.

The curved segment 38 of the slot 30 covers at least 30%, preferably at least 50%, of an effective circumferential length 22 of the slot 30, 32 in the circumferential wall 20 of the first connector 10. On each side of the central curved segment 38 a straight segment 40, 42 is arranged. The straight segments 40, 42 are arranged at equal axial heights in the circumferential wall 20.

The curved segment 38 of the slot 30, 32 has a constant width 52. Preferably, all segments 40, 38, 42 have equal widths or have only a minor variation in width.

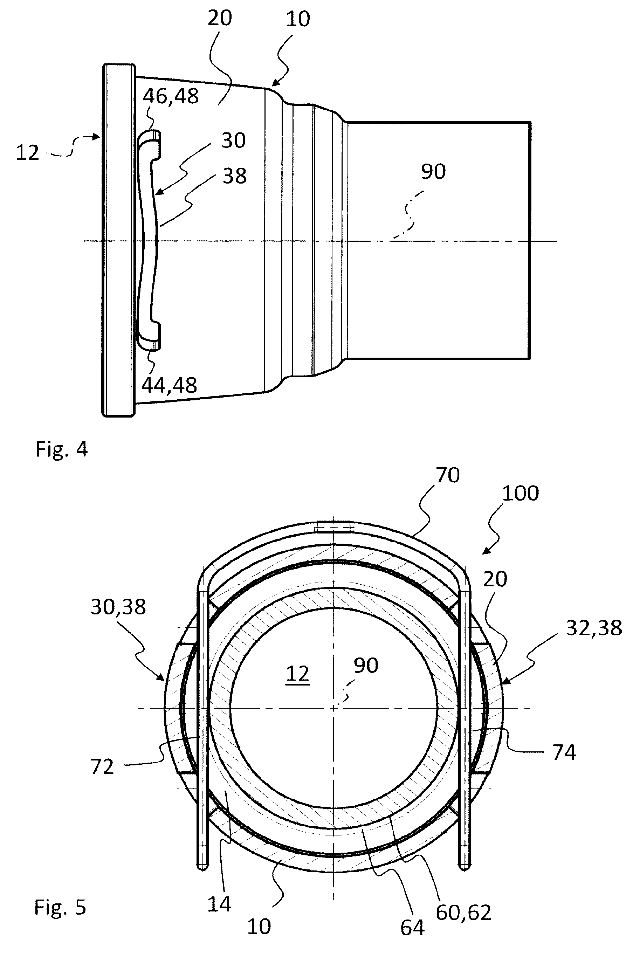

Figure 4 illustrates a side view of a connector 10 according to an example embodiment showing a slot 30 with a central curved segment 38 between two angled segments 44, 46. The angled end segments 44, 46 point axially in the direction opposing the opening 12 of the first connector 10.

The angled end segments 44, 46 connect to the central curved segment 38 by means of a curved transition region 48. The curved transition region 48 may have a radius which is increasing with increasing distance from the central curved segment 38.

Figure 5 shows a top view of a coupling arrangement 100 according to an example embodiment cut at the coupling region showing a U-shaped detent spring 70 mounted to the coupling arrangement 100. As can be seen, the straight legs 72, 74 of the detent spring 70 are arranged in the slots 30, 32 and extend into the inner region 14 of the first connector 10, clamping the spigot 62 of the second connector 60 and latching the second connector 60 when snapped behind the undercut 64 of the second connector 60. Both slots 30, 32 are provided with a central curved segment 38

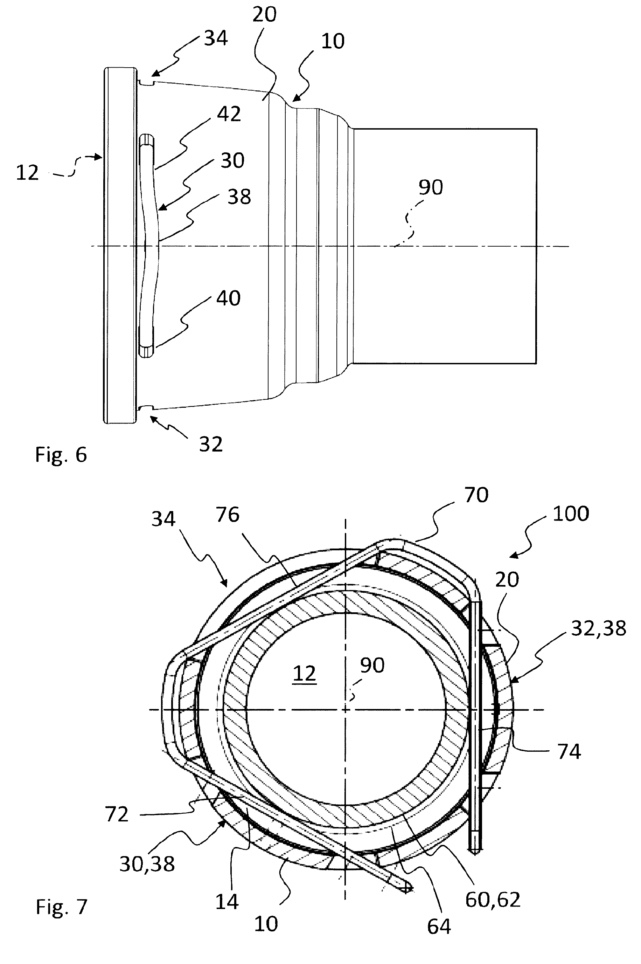

Figure 6 depicts a side view of a connector 10 according to an example embodiment showing three slots 30, 32, 34 in the connector wall 20. Figure 7 shows a top view of a cut region of a coupling arrangement 100 according to an example embodiment with the first connector 10 of Figure 6 having a triangular-shaped detent spring 70 mounted to the coupling arrangement 100. In this embodiment, only two of the three slots 30, 32, 34 are provided with a central curved segment 38, whereas the third slot 34 may be a conventional straight slot 34. Alternatively, all slots 30, 32, 34 may be provided with a central curved segment 38.

## Claims

1. A coupling arrangement (100) for coupling a first connector (10) and a second connector (60), the first connector (10) having an opening (12) for receiving at least a spigot (62) of the second connector (60) and providing at least one slot (30) arranged in the circumferential wall (20) of the first connector (10), wherein a detent spring (70) is provided having at least one leg (72), the at least one leg (72, 74, 76) of the detent spring (70) in a closed state of the detent spring (70) extending in an inner section (14) of the first connector (10) and clamping the second connector (60) when the second connector (60) being arranged in its end position in the first connector (10), wherein the slot (30, 32) is configured as a locking groove for the at least one leg (72, 74, 76), the slot (30) having a central curved segment (38), so that a concave side (50) of the curved segment (38) is pointing axially in the same direction as the opening (12) of the first connector (10).

2. The coupling arrangement according to claim 1, wherein at least the curved segment (38) of the slot (30, 32) has a substantially constant width (52).

3. The coupling arrangement according to claim 1 or 2, wherein the curvature of the central curved segment (38) of the slot (30, 32) has a substantially constant radius (54).

4. The coupling arrangement according to any one of the preceding claims, wherein at one or both sides of the curved segment (38) the slot (30, 32) provides straight end segments (40, 42) arranged at equal axial heights in the circumferential wall (20) or provides an angled end segment (44, 46) which points axially in the direction opposite to the opening (12) of the first connector (10).

5. The coupling arrangement according to any one of the preceding claims, wherein at least two slots (30, 32, 34) are arranged in the circumferential wall (20) of the first connector (10), the at least two slots (30, 32) having a central curved segment (38).

6. The coupling arrangement according to any one of the preceding claims, wherein three slots (30, 32, 34) are arranged in the circumferential wall (20) of the first connector (10), wherein one of the slots (30, 32, 34) is configured as a straight slot (34).

7. A connector for a coupling arrangement (100) according to any one of the preceding claims, having an opening (12) for receiving at least a spigot (62) of a second connector (60) and providing at least one slot (30, 32) arranged in a circumferential wall (20) for receiving and locking a leg (72) of a detent spring (70) wherein the slot (30, 32) is configured as a locking groove for the at least one leg (72, 74, 76), the slot (30, 32) having a central curved segment (38), so that a concave side (50) of the curved segment (38) is pointing axially in the same direction as the opening (12) of the first connector (10).

8. The connector according to claim 7, wherein at least the curved segment (38) of the slot (30, 32) has a constant width (52).

9. The connector according to claim 7 or 8, wherein the curvature of the central curved segment (38) of the slot (30, 32) has a constant radius (54).

10. The connector according to any one of the claims 7 to 9, wherein the curved segment (38) of the slot (30) covers at least 50% of an effective circumferential length (22) of the slot (30, 32) in the circumferential wall (20) of the first connector (10).

11. The connector according to any one of the claims 7 to 10, wherein at one or both sides of the curved segment (38) the slot (30, 32) provides straight end segments (40, 42) arranged at equal axial heights in the circumferential wall (20).

12. The connector according to any one of the claims 7 to 11, wherein at least at one side of the curved segment (32) the slot (30, 32) provides an angled end segment (44, 46) which points axially in the direction opposite to the opening (12) of the first connector (10).

13. The connector according to claim 12, wherein the at least one angled end segment (44, 46) connects to the central curved segment (38) by means of a curved transition region (48), preferably by means of a curved transition region (48) with a radius which is increasing with increasing distance from the central curved segment (38).

14. The connector according to any one of the claims 7 to 13, wherein at least two slots (30, 32, 34) are arranged in the circumferential wall (20) of the first connector (10), the at least two slots (30, 32) having a central curved segment (38).

15. The connector according to any one of the claims 7 to 14, wherein three slots (30, 32, 34) are arranged in the circumferential wall (20) of the first connector (10), wherein one of the slots (30, 32, 34) is configured as a straight slot (34).

16. A duct, in particular a charge air duct of an internal combustion engine, comprising a coupling arrangement according to any one of the claims 1 to 6 or comprising at least one connector according to any one of the claims 7 to 15.
